# EUROPÄISCHE PATENTSCHRIFT

(11) **EP 2 614 006 B1**
(45) Veröffentlichungstag und Bekanntmachung des Hinweises auf die Patenterteilung: **04.03.2015**
(21) Anmeldenummer: 11749098.7
(22) Anmeldetag: 25.08.2011
(51) Int. Cl.: B65C 9/42, B65C 9/40

(54) **VERFAHREN ZUM BETREIBEN EINER ETTIKETTIERMASCHINE**
METHOD FOR OPERATING A LABELLING MACHINE
PROCÉDÉ DE COMMANDE D'UNE MACHINE À ÉTIQUETER

(30) Priorität: 07.09.2010 DE 102010044580
(43) Veröffentlichungstag der Anmeldung: 17.07.2013
(73) Patentinhaber: KHS GmbH, 44143 Dortmund (DE)
(72) Erfinder: HERRMANN, Jürgen, 57520 Rosenheim (DE)
(86) Internationale Anmeldenummer: PCT/EP2011/004263
(87) Internationale Veröffentlichungsnummer: WO 2012/031693

(56) Entgegenhaltungen:
- EP-A1- 1 627 816
- DE-A1-102008 034 744
- DE-A1-102008 051 791

## Beschreibung

Die Erfindung betrifft ein Verfahren zum Betreiben einer Etikettiermaschine.

Zu etikettierende Behälter können beispielsweise als Flaschen für Flüssigkeiten, beispielsweise für Getränke verwendet werden. Die Behälter z.B. Flaschen können aus einem transparenten oder transluzenten Material, beispielsweise aus Glas oder aus einem transluzenten Kunststoff, z.B. PET bestehen. Denkbar ist aber auch, dass die Behälter aus anderen Materialien bestehen und mit anderen Füllgütern befüllbar sind.

Bevor die Behälter der Etikettiermaschine zugeführt werden, werden diese eingehend mit geeigneten Inspektionsvorrichtungen inspiziert. Beispielsweise ist vorgesehen, eine Fremdstoffinspektion durchzuführen, in welcher die Behälter auf unerwünschten Fremdstoffe in ihrem Inneren inspiziert werden. Beispielsweise über Bandförderer werden die Behälter der Etikettiermaschine an ihrer Einlaufseite zugeführt. Die Etikettiermaschine weist zum Beispiel einen radartigen Hauptstern bzw. ein Etikettierkarussell auf, in welchem die Behälter einem Etikettieraggregat zugeführt werden, so dass die Behälter mit Etiketten versehen werden. Weiter werden die Behälter vor Erreichen des Etikettieraggregates in eine Sollposition ausgerichtet, in welcher die Behälter etikettiert werden sollen, so dass die jeweiligen Etiketten an den jeweiligen Behältern stets gleich ausgerichtet sind. Die Behälter werden an der Auslaufseite aus der Etikettiermaschine, bzw. aus dem Etikettierkarussell herausgeführt, wobei anschließend erneute Inspektionen durchgeführt werden. Auch der Weitertransport zu den nach geschalteten Inspektionsvorrichtungen kann mittels Transporteuren bzw. Bandförderern geschehen. Beispielsweise können die Behälter auf eine genügende Füllhöhe überprüft werden. In den nachfolgenden Inspektionen werden die Etiketten z.B. auf korrekten Sitz, korrekte Ausrichtung zu Embossings oder dergleichen Gestaltungsmerkmale und/oder Beschädigungen inspiziert, um nur einige Inspektionsbeispiele zu nennen.

Bekannt ist auch, eine erste Inspektionseinheit als Ausrichtstation und eine zweite Inspektionseinheit z.B. als Etikettensitzkontrolle an dem Etikettierkarussel selbst anzuordnen.

Die DE 20 2005 017 180 U1 betrifft eine Vorrichtung zum Ausrichten von Behältern sowie eine Etikettiermaschine mit einer solchen Vorrichtung. Die Behälter weisen wenigstens ein geometrisches Behältermerkmal (Embossing) auf, welches in eine Sollposition verdreht werden soll. Mit einem ersten Kamerasystem erfolgt eine Vorausrichtung der Behälter. In Transportausrichtung des Behälters folgt ein weiteres Kamerasystem, welches eine Ausrichtung in die Sollposition bewirkt, wobei das weitere Kamerasystem einen engeren Bereich der Umfangsfläche erfasst als das erste Kamerasystem. Die DE 20 2005 017 180 U1 schlägt demnach eine mehrstufige, und zwar eine dreistufige Ausrichtung zur abschließenden Feinausrichtung vor, wozu vier Kameras vorgesehen sind. Die in Förderrichtung gesehen ersten beiden Kameras bilden die erste Ausrichtstufe, die folgende dritte Kamera dient zur weiteren Ausrichtung, wobei die folgende vierte Kamera zur Feinausrichtung dient.

Die DE 20 2005 020 478 U1 befasst sich mit einer Etikettensitzkontrolle von Behältern, welche auf einer Etikettiermaschine etikettiert wurden. Die Etikettensitzkontrolle weist eine Kamera zum Abbilden der mit Etiketten bestückten Behälter auf. Zwischen der Kamera und dem Behälter ist eine optische Einrichtung angeordnet, die umfänglich und/oder übereinander mit Zwischenabstand versetzt angeordnete Etiketten erfassende Strahlengänge erzeugt. Dabei werden nur die interessierenden Etikettenflächen inspiziert, wobei alle übrigen Mantelflächen des Behälters außer betracht bleiben. Insofern ist mit der Etikettensitzkontrolle der DE 20 2005 020 478 U1 eine korrekter Sitz des Etiketts zu einem möglichen Embossing nicht überprüfbar.

Die DE 10 2004 005 994 A1 offenbart eine Etikettiermaschine. Diese weist eine Vorrichtung zum Zuführen von Etiketten und ein Etikettieraggregat auf. Das Etikettieraggregat besitzt einen Etikettenbehälter, eine Leimwalze, einen mit beleimbaren Entnahmesegmenten versehenen rotierbaren Träger, sowie einen Greifzylinder. So können beispielsweise Flaschen mit Etiketten versehen werden, wobei die Etikettiermaschine z.B. als Rundläufer, Linearmaschinen oder auch Horizontalläufer ausgebildet sein kann. Im Auslaufbereich der etikettierten Flaschen ist eine Etikettensitzkontrolleinrichtung angeordnet, mit welcher die gewünschte Anordnung der Etiketten auf den Flaschen überwacht wird. Denkbar ist, die Etiketten auf einen korrekten Sitz beispielsweise zu an den Flaschen angeordneten Gestaltungsmerkmalen (so genannte Embossings) zu überprüfen. Möglich ist auch, Hals- und Brustetiketten auf korrekte Ausrichtung zueinander oder auch zu den Gestaltungsmerkmalen zu überprüfen. Bei einer Änderung des Etikettensitzes außerhalb einer vorgebbaren Toleranzgrenze vermittelt die Etikettensitzkontrolleinrichtung entsprechende Signale zur Ansteuerung einer Korrektureinrichtung, welche auf die Etikettieraggregate einwirkt, so dass ein korrekter Etikettensitz erreichbar ist. Natürlich werden die mit einen nicht korrekt ausgerichteten Etikett versehenen Flaschen in einer Ausschleusvorrichtung aussortiert, was selbstverständlich auch über das entsprechend generierte Signal der Etikettensitzkontrolleinrichtung möglich ist.

Bekannt ist, dass die etikettierten Behälter mittels einem dem Etikettieraggregat nachgeschalteten Erfassungssystem bezüglich des Embossing erneut ausgerichtet werden (DE 10 2008 050 249 A1), um in der Etikettensitzkontrolle eine Sitzkontrolle hinsichtlich eines faltenfreien bzw. beschädigten Sitzes und auch hinsichtlich der korrekten Ausrichtung zum Embossing durchführen zu können. Beispielsweise werden Flaschen oder ähnliche Behälter mittels einer Füllvorrichtung mit einem Füllgut befüllt, um dann der Etikettiermaschine zugeführt zu werden. Die Behälter werden in der Etikettiermaschine oder vorher beispielsweise bezogen auf Gestaltungsmerkmale (so genannte Embossings) ausgerichtet (erste Inspektionseinheit), so dass die Etiketten ausgerichtet zu den Gestaltungsmerkmalen auf den Behälter aufgebracht werden können. Die etikettierten Behälter werden nach dem Etikettieren erneut ausgerichtet, und an einer (zweiten) Inspektionsvorrichtung, welche als Etikettensitzkontrolle ausgebildet sein kann, vorbeigeführt bzw. transportiert. Erkennt die Etikettensitzkontrolle Behälter mit einem schlechten oder fehlerhaften Etikettensitz, wird ein Signal zum Ausschleusen erzeugt. Die ausgeschleusten Behälter, zum Beispiel Flaschen werden auf einem gesonderten Transporteur gelagert. Insofern ist für eine erneute Ausrichtung zwischen dem Etikettieraggregat und der Etikettensitzkontrolle ein weiteres Erfassungssystem, z.B. in Ausgestaltung der ersten Inspektionseinheit als Ausrichtstation vorgesehen.

Die DE 10 2007 031 218 A1 befasst sich mit einer Vorrichtung umfassend einen Drehtisch, der relativ zu einer Unterlage drehbar ist; Antriebe, die auf dem Drehtisch angeordnet sind, wobei jeder Antrieb einen Winkelsensor umfasst; Drehteller, die auf dem Drehtisch angeordnet sind, wobei jeder Antrieb einen Drehteller antreibt; und eine mit der Unterlage unbeweglich verbundene, den Drehtisch umlaufende Markierungsspur. Jedem Antrieb ist ein Sensor auf dem Drehtisch zugeordnet, mit dem die Markierungsspur auslesbar ist, wobei jeder Antrieb eine elektronische Schaltung umfasst, mit der die Orientierung bezüglich der Unterlage des durch den Antrieb jeweils angetriebenen Drehteller aus dem Signal des Winkelsensors des Antriebs und dem Signal des zugeordneten Sensors bestimmbar ist. Im Drehtellerantrieb ist ein Programm in Form eines Soll-Bewegungsablaufs abgelegt, das vorgibt, welchen Drehwinkel der Drehteller bezüglich des Drehtisches bei dem vom Sensor momentan erfassten Drehwinkel des Drehtisches bezüglich der Unterlage einnehmen soll. Je nach Anwendung ist somit ein unterschiedlicher Bewegungsablauf des Drehtellers bei einer Drehung des Drehtisches realisierbar.

Die DE 44 41 245 A1 offenbart ein Verfahren zum Kontrollieren von etikettierten Gefäßen. Die Kontrollvorrichtung ist in einer Etikettiermaschine integriert, und weist einen Laser-Entfernungsmesser auf. Mit dem Laser-Entfernungsmesser kann festgestellt werden, ob ein Behälter mit einem Etikett versehen ist oder nicht. Während eines aktiven Messintervalls trifft der vom Laser-Entfernungsmesser ausgehende Laserstrahl zuerst auf die Oberfläche einer vorbeibewegten Flasche und misst deren Entfernung von seinem feststehenden Gehäuse, welches somit den konstanten Bezugsort bildet. Sobald der Laserstrahl auf die Oberfläche des Etiketts trifft, ergibt sich eine sprunghafte Verringerung der momentan gemessenen Entfernung entsprechend der Dicke des Etiketts und gegebenenfalls des Leimfilms zwischen der Flasche und dem Etikett. Diese sprunghafte Abstandsänderung in wird einer Auswerteeinheit erfasst, und als Kriterium für das Vorhandensein eines Etiketts gewertet. Dementsprechend sendet die Auswerteeinheit kein Signal oder ein Gut-Signal an eine Sortiervorrichtung aus. Ist kein Etikett auf der Flasche vorhanden, wird auch kein sprunghafter Entfernungssprung detektierbar, so dass die Auswerteeinheit ein Fehlersignal an die Sortiervorrichtung abgibt, welche die entsprechende Flasche aussortiert. Als Hauptnachteil ist dabei anzusehen, dass die Kontrolleinrichtung lediglich feststellen kann, ob ein Etikett an der Flasche vorhanden ist oder nicht. Nicht feststellbar ist dagegen, ob das Etikett auch korrekt beispielsweise zu Gestaltungsmerkmalen ausgerichtet ist, oder Falten aufweist.

Die DE 20 2004 021 611 U1 geht von kombinierten Etikettensitzkontrolleinrichtungen aus, bei welchen sowohl eine Etikettensitzkontrolle als auch eine Konturerkennung (Embossings) möglich ist. Dabei sind eine Auflichtbeleuchtung zur Etiketten- und Durchbilderkennung sowie eine Durchlichtbeleuchtung für die Konturkontrolle erforderlich, wobei zwei aus verschiedenen Richtungen strahlende Beleuchtungseinrichtungen eingesetzt werden. Die DE 20 2004 021 611 U1 weist darauf hin, dass der Einsatz zweier Beleuchtungseinrichtungen hinsichtlich der Abstimmung von Einzelbeleuchtungsstärke und -dauer problematisch sei, weswegen vorgeschlagen wird, mit einer einzigen Beleuchtungseinrichtung und besonders ausgeführten und angepassten optischen Mitteln Behälter sowohl mit Durchlicht als auch mit Auflicht zu beaufschlagen. Die optischen Mittel sind z.B. als ebene Platte mit heller Oberfläche oder als Spiegel ausgeführt, welche in genau angepassten Winkeln und Positionen zum Strahlengang der einzigen Beleuchtungseinrichtung angeordnet sein sollten. So können Etiketten nicht nur bezüglich eines faltenfreien oder beschädigungsfreien Sitzes sondern gleichzeitig auch bezüglich der korrekten Ausrichtung zum Embossing überprüft werden. Allerdings ist hierfür nach wie vor eine Einrichtung zum Erkennen des Embossings notwendig, welche mit der Etikettensitzkontrolle kombiniert ist.

Die DE 10 2008 034 744 A1 offenbart ein Verfahren zum Betreiben einer Etikettiermaschine, wobei ein Gestaltungsmerkmal eines Behälters von einer ersten Inspektionseinheit erkannt wird, und wobei das Inspizieren des Behälters in einer zweiten Inspektionseinheit bezüglich des korrekten Etikettensitzes erfolgt.

Der Erfindung liegt daher die Aufgabe zugrunde, ein Verfahren zum Betreiben einer Etikettiermaschine anzugeben, bei welchem eine Ausrichtung von Behältern nach Embossings vor dem Etikettieren durchführbar ist, wobei in einer Etikettensitzkontrolle eine Aussage bezüglich der Etikettenposition zur Position des Embossings des betreffenden Behälters ohne weitere Embossingpositionserfassung erhältlich ist.

Erfindungsgemäß wird die Aufgabe durch ein Verfahren mit den Merkmalen des Anspruchs 1 gelöst.

Zielführend bei dem erfindungsgemäßen Verfahren ist, dass Merkmalskoordinaten von Gestaltungsmerkmalen des Behälters von der Position der in Förderrichtung der Etikettiermaschine angeordneten ersten Inspektionseinheit entlang des Förderweges des Behälters zu einer zweiten Inspektionseinheit, z.B. in der Ausgestaltung einer Etikettensitzkontrolle getrackt werden.

Die erste Inspektionseinheit weist mehrere in Förderrichtung der Etikettiermaschine angeordnete, aufeinander folgende Kameras z.B. CCD-Kameras auf. Vorteilhaft ist, wenn die Merkmalskoordinaten des Gestaltungsmerkmals des betreffenden Behälters, welche zur zweiten Inspektionseinheit übergeben werden, von der in Förderrichtung gesehen letzten Kamera detektiert werden. Natürlich soll der Begriff Kamera nicht beschränkend sein. Vielmehr umfasst der Begriff Kamera alle geeigneten Bild- bzw. Inspektionsaufnahmeeinrichtungen.

Ein Gestaltungsmerkmal im Sinne der Erfindung umfasst zum Beispiel Flaschennähte und/oder Oberflächenmarkierungen der Behälterwandung, also so genannte Embossings.

Das erfindungsgemäße Verfahren umfasst bevorzugt folgende Schritte, wobei lediglich die Schritte nach dem Einleiten des betreffenden Behälters in die Etikettiermaschine betrachtet werden. Selbstverständlich kann die Etikettiermaschine z.B. als Rundläufer, Linearmaschine oder auch Horizontalläufer ausgebildet sein kann.

In einem ersten Schritt nach der Einleitung des Behälters in die Etikettiermaschine, wird der Behälter zur ersten Inspektionseinheit gefördert, welche als Ausrichtstation ausgeführt ist. Die erste Inspektionseinheit, bevorzugt deren in Förderrichtung gesehen letzte Kamera erkennt das Gestaltungsmerkmal, bzw. dessen Merkmalskoordinaten, welche als Äquivalent für die Position eines Tragelementes, auf welchem der Behälter aufsteht, gespeichert bzw. steuertechnisch, zielführend an die zweite Inspektionseinheit, eventuell unter Zwischenschaltung einer zentralen Steuereinheit, übergeben wird.

Der Behälter wird zu einer Etikettierstation gefördert. Dabei ist ersichtlich, dass vor dem Einlauf in die Etikettierstation keine weitere Ausrichtung, zusätzlich zur ersten Ausrichtung aufgrund der ersten Inspektionseinheit, erforderlich ist.

Die Etikettierstation etikettiert den Behälter.

Der (etikettierte) Behälter wird von der Etikettierstation weg in Richtung zur zweiten Inspektionseinheit gefördert.

In der zweiten Inspektionseinheit wird unter Abgleich der gespeicherten Merkmalskoordinaten des Gestaltungsmerkmals eine Etikettensitzkontrolle durchgeführt, weswegen die zweite Inspektionseinheit auch als Etikettensitzkontrolleinheit bezeichnet werden kann.

Ersichtlich ist, dass aufgrund der gespeicherten bzw. an die zweite Inspektionseinheit übergebenen Merkmalskoordinaten des Gestaltungsmerkmals auf eine erneute Ausrichtung des Behälters vor dem Einlauf in die zweite Inspektionseinheit verzichtet werden kann.

In bekannter Weise ist das Tragelement als Tragteller mit zugeordnetem Antrieb (so genannter Variodrive) ausgeführt, so dass das Tragelement relativ zur Förderrichtung der Etikettiermaschine drehbar ist.

Weitere vorteilhafte Ausgestaltungen der Erfindung sind in den Unteransprüchen und der folgenden Figurenbeschreibung offenbart. Es zeigt die einzige

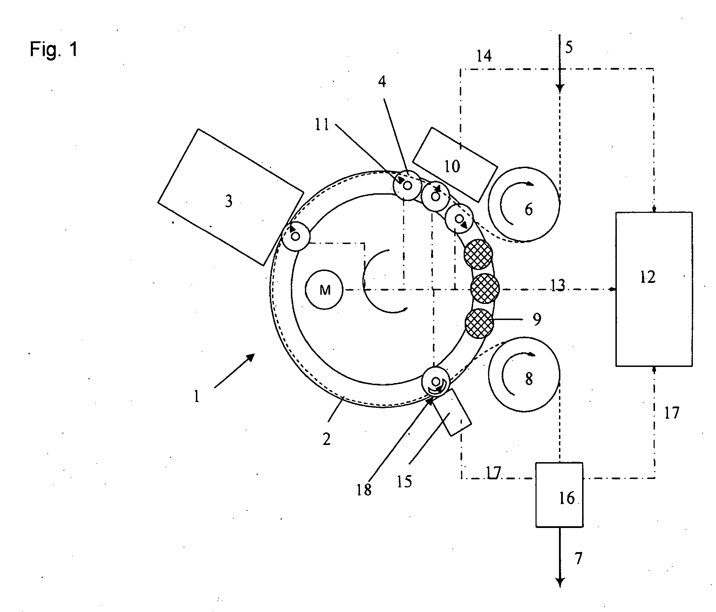

Fig. 1 eine erfindungsgemäße Etikettiermaschine in einer prinzipiellen Darstellung bei welcher das erfindungsgemäße Verfahren anwendbar ist.

Figur 1 zeigt eine Etikettiermaschine 1, welche ein Etikettierkarussell 2 aufweist. An dem Etikettierkarussell 2 ist beispielhaft lediglich ein Etikettieraggregat 3 angeordnet. Natürlich können auch mehrere Etikettieraggregate an dem Etikettierkarussel 2 vorgesehen sein. Beispielhaft ist die Etikettiermaschine 1 als Rundläufer ausgeführt. Möglich sind natürlich auch Etikettiermaschinen in der Ausgestaltung als Linearmaschinen oder auch als Horizontalläufer.

Dem Etikettierkarussell 2 werden zu etikettierende Behälter 4 an einer Einlaufseite (Pfeil 5) zugeführt, welche beispielhaft über einen Einlaufstern 6 gefördert werden. Die etikettierten Behälter 4 werden an einer Ausleitseite (Pfeil 7) aus dem Etikettierkarussell 2 mittels eines Ausleitsterns 8 ausgeleitet.

Das Etikettierkarussel 2 weist Trägerelemente 9 auf, auf welchen jeweils ein Behälter 4 aufsteht. Die Trägerelemente 9 drehen sich entsprechend der Rotation des Etikettierkarussells 2 mit diesem mit, weisen jedoch jeweils einen Drehantrieb auf, so dass der aufstehende Behälter 4 um seine Mittelachse relativ zum Etikettierkarussel 2 in oder entgegen dessen Drehsinn drehbar ist.

In Förderrichtung des Etikettierkarussels 2 ist der Einlaufseite 5 bzw. dem Einlaufstern 6 eine erste Inspektionseinheit 10 nachgeschaltet. Die erste Inspektionseinheit 10 stellt quasi eine Ausrichtstation dar, welche Gestaltungsmerkmale 11 des jeweiligen Behälters 4 erkennen kann. Die Gestaltungsmerkmale 11 können eine Flaschennaht bzw. Oberflächenmarkierungen der Behälterwandung, so genannte Embossings sein, welche prinzipiell als Pfeilspitze dargestellt sind. Die erste Inspektionseinheit 10 weist z.B. mehrere Kameras, beispielsweise CCD-Kameras auf, welche jeweils einen Umfangsabschnitt des sich vorbeibewegenden Behälters 4 aufnimmt, und so die Ist-Position des Gestaltungsmerkmals 11, also die Ist-Position des Behälters 4 auf dem jeweiligen Trägerelement 9 erkennt. Dies ist Grundsätzlich bekannt, wes wegen hier nicht näher darauf eingegangen wird. Mittels der sich ergebenden Ist-Daten und einem Vergleich mit erforderlichen Soll-Daten wird in einer zentrale Steuereinheit 12 ein Steuersignal erzeugt, welches ein

Überführen des Behälters 4 aus seiner Ist-Position in seine Soll-Position bewirkt, in dem das Trägerelement 9 entsprechend verdreht wird. Dies wird erreicht, indem das Trägerelement 9 bzw. sein Antrieb mit dem Steuersignal angesteuert wird. In dieser Soll-Position ist der Behälter 4 mit seinem jeweiligen Gestaltungsmerkmal 11 so ausgerichtet, dass ein Etikett 18 ausgerichtete zu den bzw. zu dem Gestaltungsmerkmal 11 auf dem Behälter 4 aufgebracht werden kann. In der einzigen Figur 1 ist das Etikett 18 lediglich beispielhaft ein Brustetikett, wobei ein Etikett im Sinne der Erfindung auch ein Halsetikett aufweisen kann, oder als Aufdruck auf den Behälter 4 aufgebracht ist.

Die zentrale Steuereinheit 12 ist in bekannter weise über Steuerleitungen 13 mit dem jeweiligen Trägerelement 9 bzw. dessen Antrieb verbunden und über eine Steuerleitung 14 mit der ersten Inspektionseinheit 10 verbunden, so dass ein Datenaustausch bzw. das generierte Signal direkt umgesetzt wird. Die Steuerleitungen 13 und 14 sind strichpunktiert dargestellt, wobei auch ein drahtloser Datenaustausch zwischen den Komponenten möglich ist.

Erreicht der jeweilige Behälter 4 das Etikettieraggregat 3, wird eine angepasste Positionsveränderung des Gestaltungsmerkmals 11 bewirkt, um das Etikett bzw. andere Kennzeichnungen wie z.B. Aufdrucke faltenfrei und beschädigungsfrei und ausgerichtet zu den Gestaltungsmerkmalen 11 aufzubringen. Insofern bedeutet der Begriff Etikettieren im Sinn der Erfindung ein Aufbringen von Kennzeichnungen wie Etiketten und/oder Aufdrucken oder dergleichen auf dem entsprechenden Außenumfang des Behälters 4.

Nach dem Etikettieren wird der etikettierte Behälter 4 einer zweiten Inspektionseinheit 15 zugeführt, in welcher die Etiketten zum Beispiel auf korrekten Sitz zum Gestaltungsmerkmal 11 aber z.B. auch auf faltenfreien und beschädigungsfreien Sitz hin überprüft werden. Beide Inspektionsaufgaben werden mit angepassten, unterschiedlichen Beleuchtungsverfahren durchgeführt. Erkennt die zweite Inspektionseinheit 15 zum Beispiel ein faltig aufgebrachtes oder beschädigtes Etikett wird ein entsprechendes Steuersignal an eine Ausleitvorrichtung 16 generiert, welches die Ausleitung des fehlerhaften Behälters 4 bewirkt. Die Ausleitvorrichtung 16 ist über eine Steuerleitung 17 mit der zweiten Inspektionseinheit 15 verbunden, wobei die Steuerleitung 17 zur zentralen Steuereinheit 12 weitergeführt ist. Die Steuerleitung 17 ist ebenfalls strichpunktiert dargestellt, wobei ebenfalls ein drahtloser Datenaustausch denkbar ist. Mit der zweiten Inspektionseinheit 15 wird bisher also nicht nur der korrekte Sitz des Etiketts hinsichtlich eines faltenfreien bzw. beschädigungsfreien Sitzes überprüft, sondern auch die korrekte Ausrichtung zum Gestaltungsmerkmal 11.

Hier setzt die Erfindung beginnend bei der ersten Inspektionseinheit 10 an, so dass in der zweiten Inspektionseinheit 15 lediglich der korrekte Sitz des Etiketts hinsichtlich eines faltenfreien Sitzes und/oder beschädigungsfreien Sitzes losgelöst von der ausgerichteten Position des Gestaltungsmerkmals 11 zum Etikett überprüft wird.

Zielführend ist, wenn eine der Kameras der ersten Inspektionseinheit 10, bevorzugt die in Rotationsrichtung des Etikettierkarussels 2 gesehen letzte Kamera der ersten Inspektionseinheit 10 Merkmalskoordinaten der bzw. des Gestaltungsmerkmals 11 über die Steuerleitung 14 an die zentrale Steuereinheit 12 bzw. an die zweite Inspektionseinheit 15 leitet, so dass diese Merkmalskoordinaten, respektive die Position des Tragelementes 9 auf dem Förderweg des Behälters 4 von der ersten Inspektionseinheit 10 an dem Etikettieraggregat 3 vorbei zur zweiten Inspektionseinheit trackt, also die Spur des jeweils betreffenden Behälters 4 hinsichtlich einer jeweils erfolgenden Verdrehung des Behälters 4 bzw. seiner Gestaltungsmerkmale 11 aus der mit der letzten Kamera aufgenommenen Soll-Position verfolgt. Diese getrackten Merkmalskoordinaten des Behälters 4 bzw. des betreffenden Trägerelementes 9, der auch als Drehteller mit Variodrive bezeichnet werden kann, werden an die zweite Inspektionseinheit 15, welche auch als Etikettensitzkontrolle bezeichnet werden kann, weitergeleitet, bzw. sind in dieser gespeichert. So ist eine erneute Erfassung des betreffenden Behälters 4 bzw. eine Positionserfassung des Embossings mittels weiterer Kameras vor dem Etikettieraggregat 3 und insbesondere vor der zweiten Inspektionseinheit 15 nicht mehr erforderlich.

Zudem kann mit dem erfindungsgemäßen Vorgehen auf ein zusätzliches Erkennen des Gestaltungsmerkmals 11 per Etikettensitzkontrolle entfallen, wobei lediglich Falten, Beschädigungen oder dergleichen Schieflagen erkannt werden müssen. Dies ist vorteilhaft hinsichtlich einer sehr einfachen Ausgestaltung der zweiten Inspektionseinheit 15 bzw. der Etikettensitzkontrolle, da diese nunmehr lediglich für eine deutliche 360°Rundumabwicklung des Behälters 4 bzw. des Etiketts ausgelegt werden muss, wobei Standardlichtgeber und Standardbeleuchtungsverfahren verwendet können. Spezifische Beleuchtungen zum Erkennen von Gestaltungsmerkmalen sind nicht mehr erforderlich, so dass die Etikettensitzkontrolle durchweg standardisiert werden kann.

Zielführend ist bei der Erfindung, dass die Merkmalskoordinaten des Embossings des Behälters 4, also beispielsweise einer Flasche auf dem Etikettierkarussel 2 bzw. Etikettierstern von der Position der in Rotationsrichtung des Etikettierkarussels 2 letzten (Ausricht)Kamera bis zur Kameraeinheit der zweiten Inspektionseinheit getrackt wird.

In einem ersten Schritt wird dabei das Gestaltungsmerkmal 11 des Behälters 4 erkannt, und als Äquivalent für die Position des Tragelementes 9 (Winkelgrad/-position des Variodrive) bzw. des Behälters 4 gespeichert bzw. steuertechnisch übergeben.

Der Behälter 4 wird umlaufend zur Etikettierstation 3 gefördert bzw. gedreht (Rotation des Etikettierkarussels 2)

An der Etikettierstation 3 wird der Behälter 4 etikettiert.

Der (etikettierte) Behälter 4 wird von der Etikettierstation 3 weg in Richtung zur zweiten Inspektionseinheit 15 bzw. zur Etikettensitzkontrolle gefördert bzw. gedreht (Rotation des Etikettierkarussels 2).

In der zweiten Inspektionseinheit 15 bzw. in der Etikettensitzkontrolle wird unter Abgleich mit der gespeicherten Embossing-Position nur noch eine Etikettensitzkontrolle durchgeführt. Ein zusätzliches Erkennen des Embossings per Etikettensitzkontrolle entfällt aufgrund des erfindungsgemäßen Vorgehens. Dazu werden einfach die Merkmalskoordinaten des Embossings von der zweiten Inspektionseinheit 15 von der letzten Ausrichtkamera übernommen.

Natürlich sind die in Figur 1 dargestellten Drehrichtungen des Etikettierkarussels 2 in Zusammenhang mit dem Ein- und Ausleitstern 6 und 8 nur beispielhaft. Hinzuweisen ist darauf, dass Etikettiermaschinen einen erheblichen Durchsatz Behältern haben, so dass natürlich nicht nur ein einziges Trägerelement 9, sondern mehrere Trägerelemente 9 vorgesehen sind, auf denen jeweils ein Behälter 4 aufsteht.

### Bezugszeichenliste

- 1: Etikettiermaschine
- 2: Etikettierkarussell
- 3: Etikettieraggregat
- 4: Behälter
- 5: Einlaufseite
- 6: Einlaufstern
- 7: Ausleitseite
- 8: Ausleitstern
- 9: Trägerelement
- 10: Erste Inspektionseinheit
- 11: Gestaltungsmerkmal
- 12: Zentrale Steuereinheit
- 13: Steuerleitung
- 14: Steuerleitung
- 15: Zweite Inspektionseinheit
- 16: Ausleitvorrichtung
- 17: Steuerleitung
- 18: Etikett

## Patentansprüche

1. Verfahren zum Betreiben einer Etikettiermaschine (1), wobei Merkmalskoordinaten eines Gestaltungsmerkmals (11) eines Behälters (4) von einer ersten Inspektionseinheit (10) erkannt werden und an eine auf ein Etikettieraggregat (3) folgende zweite Inspektionseinheit (15) übergeben werden, wobei das Inspizieren des Behälters (4) in der zweiten Inspektionseinheit (15) bezüglich korrekten Etikettensitzes unter Abgleich der von der ersten Inspektionseinheit (10) erhaltenen und in der zweiten Inspektionseinheit (15) gespeicherten Merkmalskoordinaten des Gestaltungsmerkmals (11) des betreffenden Behälters (4) erfolgt, indem die Merkmalskoordinaten des Gestaltungsmerkmals (11) entlang des Förderweges von der ersten Inspektionseinheit (10) zur zweiten Inspektionseinheit (15) getrackt werden.

2. Verfahren nach Anspruch 1, **dadurch gekennzeichnet, dass** die erste Inspektionseinheit (10) mehrere Kameras aufweist, welche in Förderrichtung aufeinander folgend angeordnet sind wobei die Merkmalskoordinaten des Gestaltungsmerkmals (1) von einer in Förderrichtung gesehen letzten Kamera an die zweite Inspektionseinheit (15) übergeben wird.

3. Verfahren nach Anspruch 1 oder 2, umfassend einen ersten Schritt nach der Einleitung des Behälters (4) in die Etikettiermaschine (1), in welchem der Behälter (4) der ersten Inspektionseinheit (10) in Ausgestaltung als Ausrichtstation zugeführt wird, deren in Förderrichtung gesehen letzte Kamera die Merkmalskoordinaten des Gestaltungsmerkmals (11) erkennt und als Äquivalent für eine Position eines Tragelementes (9) speichert bzw. steuertechnisch an die zweite Inspektionseinheit (15) übergibt.

4. Verfahren nach einem der vorhergehenden Ansprüche, umfassend ein Fördern des Behälters (4) von der ersten Inspektionseinheit (10) zu dem Etikettieraggregat (3), wobei der Behälter (4) vor dem Einlauf in das Etikettieraggregat (3) mittels der ersten Inspektionseinheit (10) hinreichend ausgerichtet ist.

5. Verfahren nach einem der vorhergehenden Ansprüche, umfassend das Etikettieren des Behälters (4) in dem Etikettieraggregat (3) und Fördern des Behälters (4) von dem Etikettieraggregat (3) zur zweiten Inspektionseinheit (15), ohne dass eine Erkennung des Gestaltungsmerkmals (11) durchgeführt wird.

## Claims

1. Method for operating a labelling machine (1), wherein feature coordinates of a design feature (11) of a container (4) are detected by a first inspection unit (10) and are transferred to a second inspection unit (15), downstream of a labelling device (3), wherein the inspection of the container (4) in the second inspection unit (15), with regard to the correct label location, is carried out by comparison of the feature coordinates of the design feature (11) of the container (4) concerned, these coordinates being detected by the first inspection unit (10) and stored in the second inspection unit (15), and with the feature coordinates of the design feature (11) being tracked along the conveying path from the first inspection unit (10) to the second inspection unit (15).

2. Method according to claim 1, **characterised in that** the first inspection unit (10) comprises a plurality of cameras, which are arranged sequentially to one another in the conveying direction, wherein the feature coordinates of the design feature (1) are transferred from a last camera, seen in the conveying direction, to the second inspection unit (15).

3. Method according to claim 1 or 2, comprising a first step after the introduction of the container (4) into the labelling machine (1), in which the container (4) is conveyed to the first inspection unit (10) in the embodiment of an alignment station, of which the last camera seen in the conveying direction detects the feature coordinates of the design feature (11) and stores them as equivalent for a position of a carrier element (9) or, respectively transfers them by control technology methods to the second inspection unit (15).

4. Method according to any one of the preceding claims, comprising a conveying of the container (4) from the first inspection unit (10) to the labelling device (3), wherein the container (4) is adequately aligned before introduction into the labelling device (3) by means of the first inspection unit (10).

5. Method according to any one of the preceding claims, comprising the labelling of the container (4) in the labelling device (3) and conveying of the container (4) from the labelling device (3) to the second inspection unit (15), without a detection of the design feature (11) being carried out.

## Revendications

1. Procédé de commande d'une machine à étiqueter (1), des coordonnées d'une caractéristique de conception (11) d'un récipient (4) étant détectées par une première unité d'inspection (10) et transmises à une seconde unité d'inspection (15) suivant un groupe d'étiquetage (3), l'inspection du récipient (4) dans la seconde unité d'inspection (15) par rapport à la bonne position d'étiquette étant effectuée en comparant les coordonnées de la caractéristique de conception (11) enregistrées dans la seconde unité d'inspection (15) et reçues par la première unité d'inspection (10) du récipient concerné (4) en ce que les coordonnées de la caractéristique de conception (11) sont suivies le long de la voie de transport de la première unité d'inspection (10) à la seconde unité d'inspection (15).

2. Procédé selon la revendication 1, **caractérisé en ce que** la première unité d'inspection (10) présente plusieurs caméras qui sont agencées de manière consécutive dans le sens de transport, les coordonnées de la caractéristique de conception (1) étant transmises par une dernière caméra vu dans le sens de transport à la seconde unité d'inspection (15).

3. Procédé selon la revendication 1 ou 2, comprenant une première étape après l'introduction du récipient (4) dans la machine à étiqueter (1), dans laquelle le récipient (4) est amené à la première unité d'inspection (10) en configuration comme poste d'orientation, dont la dernière caméra vu dans le sens de transport détecte les coordonnées de la caractéristique de conception (11) et les enregistre comme équivalent pour une position d'un élément porteur (9) ou les transmet par commande à la seconde unité d'inspection (15).

4. Procédé selon l'une quelconque des revendications précédentes, comprenant un transport du récipient (4) de la première unité d'inspection (10) au groupe d'étiquetage (3), le récipient (4) étant suffisamment orienté avant l'entrée dans le groupe d'étiquetage (3) à l'aide de la première unité d'inspection (10).

5. Procédé selon l'une quelconque des revendications précédentes, comprenant l'étiquetage du récipient (4) dans le groupe d'étiquetage (3) et le transport du récipient (4) du groupe d'étiquetage (3) à la seconde unité d'inspection (15) sans qu'une détection de la caractéristique de conception (11) ne soit réalisée.
